# EUROPEAN PATENT SPECIFICATION

(11) **EP 3 201 824 B1**
(45) Date of publication and mention of the grant of the patent: **05.05.2021**
(21) Application number: 15771969.1
(22) Date of filing: 02.10.2015
(51) Int. Cl.: G06K 7/08, G06K 19/067

(54) **REDUCED INK COVERAGE OF PRINTED ELECTRONIC DESIGNS BY ALTERNATIVE FILL PATTERNS COMPRISING RAY AND GRID PATTERNS**
REDUZIERTE TINTENABDECKUNG VON GEDRUCKTEN ELEKTRONISCHEN DESIGNS DURCH ALTERNATIVE FÜLLMUSTER MIT STRAHL- UND GITTER-MUSTERN
COUVERTURE D'ENCRE RÉDUITE DE CONCEPTIONS ÉLECTRONIQUES IMPRIMÉES PAR DES MOTIFS DE REMPLISSAGE ALTERNATIFS COMPRENANT DES MOTIFS DE RAYON ET DE GRILLE

(30) Priority: 02.10.2014 EP 14187476
(43) Date of publication of application: 09.08.2017
(73) Proprietor: Touchcode Technologies, LLC, New York NY 10019 (US)
(72) Inventor: FOERSTER, Matthias, 01307 Dresden (DE); ILLING, Marko, 09111 Chemnitz (DE); WEIGELT, Karin, 09112 Chemnitz (DE)
(74) Representative: Hoffmann Eitle
(86) International application number: PCT/EP2015/072783
(87) International publication number: WO 2016/050953

(56) References cited:
- WO-A1-2011/154524
- WO-A2-2013/036056
- DE-A1-102012 023 082
- GB-A- 2 436 636

## Description

The present invention relates to an information carrier comprising an electrically non-conductive substrate with an electrically conductive layer arranged as a pattern, which encodes information wherein, said pattern is formed from at least one input region, at least one connecting line and at least one contact area. The invention also refers to the use of this information carrier and a method for the manufacture of such an information carrier.

### Background of the invention

During the last years, there has been a rapid development for devices capable of storing information which additionally interact with touch screens. A touch screen is in particular a physical interface for sensing electrical capacitances or capacitance differences within subareas of a defined area. These touch screens are common in (but not limited to) smart phones, mobile phones, displays, tablet-PCs, tablet notebooks, graphic tablets, television devices, trackpads, touchpads, input devices, PDAs, and/or MP3 devices. When the term "touch screen" is used in the context of this application, in most cases the touch screen bearing device which the touch screen is connected with is also addressed.

Technologies to perform detection of information carriers include resistive, capacitive, acoustic and optical technologies. These technologies may be optimized - often by the use of software adaption and a touch controller - to detect, for example, a human finger or a specially designed stylus that is brought into contact with a touch screen.

The prior art shows several ways of producing information carriers that can interact with touch screens. With the aid of printing techniques or other coating processes, information carriers to be detected by smart devices can be produced. A commonly used approach is to apply a bar code or a QR code on any kind of object. These bar codes can be sensed by suitable optic scanners or cameras, which are often part of the devices including a touch screen. Although easy and economically to produce, bar codes have some disadvantageous, e.g. the fact that it is easy to generate a counterfeit by just copying the bar code. Thus, they are less safe than more sophisticated information carriers. Furthermore, it may not be desirable for certain applications that the bar code covers a certain area of the object where the code is applied to and that it is visible to a user.

In WO 2011/154524 A1, a system for the transfer of information is disclosed. This system comprises a capacitive information carrier and a surface sensor by the virtue of which the above-mentioned disadvantageous of the prior art are overcome. The basic idea of the system is to use an information carrier that may comprise a pattern of electrically conductive regions placed on a non-conductive substrate by printing. This pattern is referred to as a touch structure. When the touch screen technology, for example, is optimized to detect a human finger or a specially designed stylus that is brought into contact with a touch screen, this touch structure aims at imitating the properties and the arrangement of fingertips.

Furthermore, another aspect of the invention described in WO 2011/154524, comprises a process for acquiring information, comprising a capacitive information carrier, a capacitive surface sensor, a contact between the two elements, and an interaction which makes a touch structure of the information carrier evaluable for a data-processing system connected to the surface sensor and can trigger events that are associated with the information carrier.

According to WO 2011/154524 A1, the information carrier can include at least one electrically conductive layer arranged on an electrically non-conductive substrate. An interaction between the information carrier and the capacitive surface sensor is achieved by bringing into contact the capacitive surface sensor and the information carrier. It may be preferred that the contact is a static and/or dynamic contact. In the context of WO 2011/154524 A1, an information carrier may be, in particular, a medium for the storage, replication, deposition and/or assignment of information.

The combination of at least one or more touch points in a touch structure can replicate the arrangement and/or properties of fingertips, wherein the property of the touch structure is described to the effect that said touch points can execute an input on a surface sensor just like the tip of one or multiple fingers. Such a structure can be evaluated by a data-processing system connected to the surface sensor and processed by software technology. The system described in WO 2011/154524 A1 allows for detecting the information carrier by means of a surface sensor capacitively.

When a conventional information carrier is placed on a capacitive touch screen, the software running on the touch screen device recognizes among other features the relative positions of the electrically conductive touch points of the information carrier. It would be appreciated by a person skilled in the art if the relative positions of the touch points detected by the touch screen were exactly the same as the relative physical positions of the touch points applied on the non-conductive substrate. It has been shown, however, that the detected relative positions are shifted to some extend. This is due to the interfering influence of the conductive traces on the touch screen.

Printed electronic information carriers, such as some of the information carrier described in WO 2011/154524 A1, have in common to be designed for optimized interaction with capacitive touch screens. In order to achieve this aim, they can comprise functional components, which show 100 % filling. Functional components in the context of the present invention may for example be the parts of the touch structure, e.g. the touch points, the contact area and the connecting lines. In the context of this application, 100 % filling means that the area of the functional component is completely filled with the electrically conductive material, which it consists of. 100 % filled functional components generate a larger volume of electrically conductive material that will interact with the touch screen optimizing the technical effect of the prior art information carrier.

As long as the printed electronic devices are produced by foil transfer methods, the coverage of the functional components of the information carrier does not influence the production costs of the information carrier. Based on the production process known from the prior art of capacitive information carriers using a foil transfer method, the metal foil is applied as a complete layer on a structured adhesive on a non-conductive substrate. Thereby the metal foil just sticks onto the non-conductive substrate whereby the adhesive is applied. The rest of the metal foil is typically not used again. Thereby the costs are not influenced by the coverage of the functional elements but only by the surface and size of the information carrier. With other words: when using foil transfer methods, an optimized interaction between the functional components of the information carrier and a touch screen is obtained by producing 100 % filled functional components. This is achieved at the same price as information carriers that would not comprise 100 % filled functional components, as the metal foil is typically not used again.
As capacitive information carriers known from the art are often used in cost sensitive markets, the inventors appreciated if an information carrier can be provided for which the choice and the design of the functional components does influence the production costs enabling for a cost-efficient manufacture process.
The object of the present invention is to provide an information carrier which overcomes the drawbacks and disadvantageous of the prior art and which can be produced in a more cost-efficient manner compared to conventional information carriers.
The object is achieved by the independent claims. Advantageous embodiments result from the dependent claims.

### Summary of the invention

One aspect of the present invention relates to an information carrier according to claim 1.

In the sense of the present invention, at least one input region consists of several sub areas, which correspond to the touch points known from the prior art. It is appreciated that these sub areas of the input region interact with a touch screen. In the context of the present application, interaction between the sub areas of the input region and a touch screen means that the touch screen detects the sub areas of the input region and that the sub areas of the input region are capable of triggering events on the touch screen. In the present application, the terms touch points and sub areas of the input region will be used synonymously.

A touch screen is in particular a physical interface for sensing electrical capacitances or capacitance differences within subareas of a defined area. These touch screens are common in (but not limited to) smart phones, mobile phones, displays, tablet-PCs, tablet notebooks, graphic tablets, television devices, trackpads, touchpads, input devices, PDAs, and/or MP3 devices. Technologies to perform this detection include resistive, capacitive, acoustic and optical technologies. All these technologies may be optimized to detect, for example, a human finger tip or a specially designed stylus that is brought into contact with a touch screen.

The sub areas of the input region are connected to each other by connecting lines, which may also comprise several sub areas. For the connecting lines, the term "sub areas" refer to the single area connecting two touch points or a touch point to a contact area. The connecting lines can also be referred to as connecting or conductive traces. In general, these conductive traces have a rectangular shape where one of the two side lengths is much larger than the second side length. In the context of the present invention, the shorter side length will be referred to as broad side, whereas the other side length will be referred to as long side of the sub area of the connecting line. Next to connecting the sub areas of the input region to each other, they also connect the touch points to the at least one contact area. The contact area corresponds to the coupling area of information carriers known from the prior art. It can be preferred that there is only one coupling area present on the information carrier according to the present application. It can also be preferred that the coupling area comprises at least two sub areas.

The purpose of the contact area is to generate a local change in the electrical potential of the sub areas of the input area, which can be detected by a touch screen of, e.g. a smart device. It can be preferred that the connecting lines and the contact area are not detected by a touch screen, nor trigger events on it and that only the input region is supposed to be detected by a touch screen and trigger events.

Preferably, the contact area is an area of electrically conductive material on the information carrier. It is electrically or galvanically linked via connecting lines to one or more of the touch points such that the linked areas have the same electric potential as the contact area. The coupling area is preferably easily accessible by a user in order to generate the local change in the electrical potential of the touch points. Advantageously, local change of capacitance on a touch screen is caused by bringing into contact the information carrier according to the present invention and a touch screen.

The contact area can for example be used in such a way that a human user places his finger on the coupling area. Thus, the electrically conductive areas which are electrically or galvanically linked to this contact area advantageously cause a local change in the electrical potential on the touch screen. The contact area does not necessarily need to be directly contacted by the user's finger, since the finger being in close proximity to the contact area may sufficiently influence the potential of the contact area to achieve the desired effect.

The sub areas of the input region have an area coverage in a range of 20 to 80 % and/or the at least one contact area has an area coverage in a range of 5 to 80 %. It is preferred that the sub areas of the input region are enclosed by a visible outline defining the area of the sub areas. If the sub areas of the input region are not enclosed by a visible outline, a person skilled in the art will recognize the shape and the size of the sub areas by the appearance of the sub areas. The area enclosed by said outline or the area recognized by a person skilled in the art correspond to a 100 % or complete filling of said sub areas as is known from the functional components of conventional information carriers. It has now been understood by the inventors of the present invention that efficient cost cuts can be achieved by reducing the area coverage of the sub areas of the input region and/or the at least one contact area to a range of 20 to 80 % and 5 to 80 % respectively. In the sense of this invention, an area coverage in a range of 5 to 80 % means for example that the filling of a contact area with an area of 1 cm² is in a range between 5 and 80 mm².

It was totally surprising that an area coverage in a range of 20 to 80 % for the input regions and 5 to 80 % for the contact area is sufficient to achieve the same or higher level of detection quality compared to completely filled touch points and/or contact areas.

A capacitive touch screen comprises in particular an active circuit. In the sense of the present invention, this circuit is referred to as touch controller. It is connected to a structure of electrodes. These electrodes are usually divided into transmitting and receiving electrodes which can also be referred to as transmitting and receiving lines. The touch controller preferably controls the electrodes in such a way that a signal is transmitted between one or more transmitting electrodes and one or more receiving electrodes. If the touch screen is in a state of rest, this signal is constant. A purpose of a touch screen is in particular the detection, for example, of finger tips and their position on the surface of the touch screen. By bringing into contact a finger of a user and the surface of a touch screen, the above-mentioned signal is changed as the touch controller detects a change in capacitance in its vicinity. The signal is usually diminished, because the finger takes up part of the signal from the transmitting electrode and only a reduced signal reaches the receiving electrode. In particular, the touch controller recognizes the position of the finger by detecting the crossing between transmitting and receiving lines where the reduction of the capacitance signal occurs.

If, instead of a finger, an information carrier comprising electrically conductive elements, such as the sub areas of the input region, is brought into contact to a touch screen, these sub areas cause preferably the same effect as a finger tip if the contact area of the information carrier is touched by a user. The desired effect is a change in capacitance which can be detected by the touch controller of the touch screen at the crossings between the transmitting and receiving lines. This detection mechanism was thought to work best if the printed sub areas imitating the properties of finger tips were completely filled as it seemed to be obvious that the completely filled functional components represent a critical mass large enough to "steal enough charging" from the crossings in order to generate a reliable and reproducible signal which can be detected by the touch controller. It has now been shown in tests executed by the inventors that an area coverage in a range between 20 to 80 % for the sub areas of the input region is sufficient to cause the desired signal from the touch points and that the range of area coverage is also sufficient to transfer the electrical properties of a user to said sub areas.

A person skilled in the art knows that the ranges of the area coverage refer to the current state of the art touchscreen technologies. This refers to the dimensions of the touchscreen electrodes and the sensitivity of touchscreens. Nevertheless the ranges mentioned above may alter, i.e. reduced, based on the further development of capacitive multi touch screen technologies.

If an information carrier of the prior art is brought into contact with a touch screen, the touch controller will detect the absolute positions of the touch points on a touch screen. The software is able to calculate the relative positions of the touch points to each other. A person skilled in the art knows that the positions detected by the touch controller and the physical positions are not identical, but that small deviations occur. These deviations are due to the interfering influence of the connecting lines on the touch screen that lead to an undesired shift of the detected positions compared to the physical positions.

In a further preferred embodiment, the invention relates to sub areas of the input region comprise a grid pattern which is selected from a group comprising a honeycomb pattern, Voronoi pattern, half tone patterns with the single dots being connected either intended or by dot gain, regular square shapes, irregular square shapes, sub areas having an area coverage of less than 80 %, description fields and/or any combination thereof. That means that the grid pattern may be designed as a honeycomb pattern and/or Voronoi pattern, but can also have any other square shapes as well as regular or irregular forms, sub areas having an area coverage of less than 80 %, description fields and/or any combination thereof. It came as a surprise that a large variety of differently shaped touch points forming the input region and having different area coverage's in the range of 20 to 80 % or which are completely filled can be combined to form the input region of the information carrier according to the present invention. It is preferred in the context of the present invention that the area coverage of the input region and the contact area may depend on the electrically conductive material used and the way and method of manufacture of the electrically conductive layer forming the touch structure. In the context of the present invention, the term "grid" refers to a two-dimensional structure formed from a series of intersecting straight, vertical, horizontal and angular or curved lines.

Tests have shown that input regions formed by such a variety of different sub areas have comparable effects as completely filled input regions on a capacitive touch screen. Therefore, inventors have recognized that it is not necessary to provide input regions on information carriers that are completely filled and are expensive in production, but it is also possible to provide information carriers that may be employed in the cost sensitive market of mass articles comprising sub areas of the input region that may not be completely filled having an area coverage of less than 80 %.

The fact that the same level of detection quality can be achieved is due to the design of the sub areas of the input region, in particular due to the design of the filling. By using the honeycomb or grid pattern, completely filled sub areas, sub areas having an area coverage of less than 80 %, description fields and/or any combination thereof, area coverage's of less than 80 % can advantageously be realized without causing a deterioration in detection quality.

It is also preferred that the sub areas of the input region comprise rays, lines and/or curves or any combination thereof. These may advantageously be arranged in any regular or irregular way. Its known to a person skilled in the art that these sub areas may of course also be combined with the first above mentioned sub areas of the input region comprising honeycomb or grid patterns, sub areas having an area coverage of less than 80 %, description fields and/or any combination thereof in order to form an input region according to the present invention.

It can also be preferred that patterns or lines forming the filling of the sub areas can be equally spaced. This is advantageous if a homogeneous outer appearance is to be created. It can also be preferred that the patterns or lines forming the filling of the sub areas can be randomly distributed within the sub areas. It was totally surprising that apart from the complete filling such a large variety of different designs for the filling of the sub areas is conceivable as long as the total area coverage of the sub areas is not smaller than 20 % compared to the complete filling of the sub areas forming the input region.

It is also preferred that for example the rays, lines and curves can be arranged pointing to the center of the touch points. This central design of the filling of the sub areas of the input region advantageously leads to an enhanced center of area in the center of the touch point. It came as a surprise that this enhanced center of area helps to reduce the deviations between the detected and the physical positions of the sub areas forming the input region which occur due to the undesired influence of the connecting lines on the touch screen.

It is also preferred that the rays, lines and curves can be arranged pointing to a spot outside the center of the touch points, e,g. achieved by asymmetric rays. Deviations of the detected center of an input area compared to the physical position caused by the influence of connecting lines can thus advantageously be compensated. The detected center of an input area can surprisingly be shifted to the intended position by designing the rays, lines and curves accordingly.

In another preferred embodiment the invention relates to sub areas of the input region that have an area coverage in a range of preferably 20 to 80 %, more preferably 40 to 80 % and most preferably 60 to 80 %.

Advantageously, reducing the area coverage compared to solid filling offer the ability to save material and therefore reduce material costs. For the production of information carrier according to the state of the art, conductive inks with moderate conductivity can be used, e.g. carbon inks. To get optimal detection quality, highly conductive materials, e.g. inks containing silver particles, offer some advantages compared to moderate conductive materials. Typically, the costs of conductive materials correlate to the conductivity. For high volume applications, the costs of the electrical conductive material are a significant part of the overall production costs of an information carrier. Therefore, persons skilled in the art will appreciate a lot any information carrier and manufacture method where reduced costs can be combined with highly conductive materials.

A person skilled in the art knows that touch points still need an area coverage which enables a reliable detection on a touch screen. To trigger a touch event, it has been found that an area coverage of at least 20% is needed to enable a reliable detection once the touch points are brought into contact with a touch screen.

This may be illustrated with an application example: The costs per kg for silver ink is about 5 to 10 times higher compared to carbon ink. If the amount of ink needed to produce an information carrier according to the present invention can be reduced to 10 to 20 % of conventional amount of ink needed, the information carrier can be produced at similar costs as conventional information carriers although a conductive material is used which provides much better detection capabilities.

The sub areas of the input region and the contact area have an outline enclosing a defined area. By having an outline enclosing a defined area, the recognition of the input region by the touch screen is improved and enhanced. This is due to the above mentioned recognition technology used in most touch screen systems, which is founded on the recognition of essentially elliptical finger tips.

In another preferred embodiment of the invention, the at least one contact area has a free form and/or an outline enclosing an area of the at least one contact area with a minimal area of preferably 0.2 cm², more preferably 0.5 cm² and most preferably 1 cm². The term "having a free form" means in the sense of the present invention that the at least one contact area may have any conceivable shape, such as, but not limited to, circular, elliptical, triangular, rectangular, n-edge shaped and any more decorative shapes, such as flowers, stars, clouds, leaves, hearts etc.

The contact area according to the present invention is enclosed by an outline, said outline enclosing a minimal area of 0.2 cm², more preferably 0.5 cm² and most preferably 1 cm². If the area of the contact area is in a range of 0.2 to 0.5 cm², it came as a surprise that the in-coupling of the body capacitance of a human user is sufficient to change the electrical potential of the electrically conductive pattern so that a touch event can be triggered by the sub areas of the input region which are connected by connecting lines to the contact area, once brought into contact with a capacitive touch screen. The area coverage of a contact area enclosing at least 0.2 cm² can advantageously be decreased to about 20 % without impeding the triggering of touch events. If the contact area is in a range of 0.5 to 1 cm², the area coverage of the filling pattern can for example be decreased to 10 % without impeding the triggering of touch events. If the contact area is larger than 1 cm², the area coverage of the filling pattern can for example advantageously be decreased to 5 % without impeding the triggering of touch events. Contact areas larger than 1 cm² may be preferred because it is more convenient for the user to hit the contact area.

In the context of the present invention, it may be preferred that one or more contact areas are significantly larger than 1 cm² depending on the size of the information carrier. This advantageously enables the user to touch the information carrier anywhere on the contact area. Only the overlapping area between the finger of a user and the contact area effects the in-coupling of the body capacitance of said user.

In another preferred embodiment of the invention, the at least one contact area comprises a grid pattern which may be designed as a honeycomb pattern or Voronoi diagram, but can also have any other square shapes as well as regular or irregular forms, sub areas having an area coverage of less than 80 %, description fields and/or any combination thereof. It is preferred that any conceivable combination may be used to form the filling of the contact area, as long as a minimal filling value does not fall under 5 % compared to a complete filling. It is preferred that the contact area comprises a geometric grid, but it can also be preferred that a specific grid pattern is applied to the information carrier according to the present invention. In the sense of the present invention, the term "geometric grid" relates to a grid formed for example by crossing lines, curves or rays. The term "specific grid pattern" relates to a pattern that is customized to the specific needs of a user and which may be based on an individual logo or graphic design. In the context of the present application, a logo is a graphic mark, emblem, or symbol commonly used by commercial enterprises, organizations and even individuals to aid and promote instant public recognition. Logos may be either purely graphic or for example be composed of the name of the organization.

If the filling of the contact area is based on a plurality of logo elements, it is preferred that these single logo elements are arranged in a way that they are at least partially connected to each other. With other words: the logo elements form a pattern where the single components have contact to each other in the sense that they are electrically or galvanically connected and that transfer of electrical properties, such as charge or capacitiy, between the single elements is ensured. It may also be preferred to use inverted logos or graphics. The term "inverted" relates in the context of this application to logos or graphics where e.g. the contrast of black and white have been interchanged in order to create a visual effect for a user. In particular, an inverted contact area may relate to a contact area, which is completely printed except for at least one logo element. By this uncommon highlighting method, a witty and smart impression of the information carrier according to the present invention is caused. Such visual effects are of particular interest if the contact area is not overprinted by further layers of color or opaque white ink, but will be at least partly visible on the information carrier.

It may be preferred that a ray pattern forming the contact area consists of main lines and thinner side lines wherein either of the types may serve as an outline of the contact area. It came as a surprise that a ray design comprising said main lines and side lines shows good recognition results even if the lines are made of a conductive material having a high resistance. Thus, the information carrier according to the present invention enables to use selected materials that do not incur high production costs and will still lead to comparable recognition results by virtue of the preferred design of the contact area.

It can also be preferred that the at least one contact area has an area coverage in a range of preferably 5 to 80 %, more preferably 10 to 80 % and most preferably 20 to 80 %.

Tests have shown that the in-coupling of the body capacitance of a human user based on these area coverage's is still sufficient to change the electrical potential of the electrically conductive pattern so that a touch event can be triggered by the sub areas of the input area, which is connected to the contact area. If the contact area is in a range of 0.2 to 0.5 cm², the area coverage of the contact area may advantageously be decreased to 20 % without impeding the triggering of touch events. If the contact area is in a range 0,5 to 1 cm², it is preferred to decrease the area coverage to 10 % without impeding the triggering of touch events. If the contact area is larger than 1 cm², the area coverage may advantageously decreased to 5 % without impeding the triggering of touch events. Contact areas of larger than 1 cm² may be preferred because it is more convenient for the user to hit the contact area.

In the context of the present invention, it may be preferred that one or more contact areas are significantly larger than 1 cm² depending on the size of the information carrier. This advantageously enables the user to touch the information carrier anywhere on the contact area. Only the overlapping area between the finger of a user and the contact area effects the in-coupling of the body capacitance of a human user.

In another preferred embodiment of the invention, the at least one contact area comprises a collector area for joining a grid pattern, sub areas having an area coverage of less than 80 %, description fields, rays, lines, curves and/or any combination thereof influencing a charge density of the at least on contact area. It is preferred that collector areas are used as a starting position of the connecting lines of the electrically conductive pattern. By using collector areas where at least parts of the connecting lines meet, tests have shown that it is surprisingly possible to use generic coupling area designs that advantageously interact with every individual design of a code pattern. It came as a surprise that integrating a collector area in the touch structure of an information carrier improves the functional effects of the information carrier according to the present invention. Inventors have recognized that this layout leads to an improved and more precise detection of the information stored in the touch structure of the information carrier.

An object of the contact area of the information carrier is to be touched, for example, by a human user in order to generate a local change in capacitance. This change in capacitance is due to electrical charges that are transferred between the human user and the information carrier. When using a contact area that has an area coverage in arrange of 5 to 80 %, the amount of charges transferred between the human user and the contact area will be distributed on a smaller area compared to conventional contact or coupling areas known from the prior art. By using a collector area for joining the connecting lines, the transferred charges will be collected at the collector area, which advantageously increases the charge density at this spot to enhance the recognition of the electrically conductive pattern by the touch-screen.

In another preferred embodiment of the invention, the sub areas of the connecting lines have an essentially rectangular area with broad sides and the long sides, the ratio of said broad sides and the long sides lying in a range of preferably 1 : 500 to 1 : 5, more preferably 1 : 100 to 1 : 10, most preferably 1 : 50 to 1 : 10. It may be preferred that the single sub areas of the connecting lines either connect two sub areas of the input region with each other or a sub area of the input region to the contact area or its outline. Either the two sub areas of the input region or the one sub area of the input region and the contact area are preferably allocated spatially apart from each other so that there exists a certain distance between the areas to be connected by the connecting lines. It may therefore be preferred that the shorter broad sides of the connecting lines have contact to the areas to be connected and the distance between the two areas defines the length of the long side of the connecting line. With other words, it also can be preferred that the sub areas of the connecting lines connect the sub areas of the input region and/or the contact area with their broad sides.

In the context of the present invention, it may be preferred that the connecting lines are not designed as a grid pattern or with an area coverage of less than 100 %. It can be preferred though, to provide connecting lines whose thickness depends on the conductivity of the material used to produce said connecting lines.

It is a commonly known drawback of conventional information carriers known from the prior art that the recognition of the physical position of, e.g. the touch points of conventional touch patterns, suffers from deviations and distortions caused by the influence of the connecting lines on the touch screen. It is therefore preferred to provide connecting lines that cover as little area as possible in order to minimize the influence of said connecting lines on the position recognition of the functional components of a touch pattern.

In the context of the present invention, it may be preferred that the connecting lines and the contact area are electrically conductive, but they are not supposed to be detected by the touch screen nor to trigger events on the touch screen. They will, however, contribute to the capacitive signal of the information carrier and cause slight deviations of the detected touch points compared to the physical positions of the touch points. Therefore, it can be preferred that the conductive traces cover as little space as possible. Nevertheless, the conductive traces have to be wide enough to ensure the functionality of the conductive traces, i.e. to galvanically or electrically connect the sub areas of the input region and/or the contact area. It was totally surprising that conductive traces can be provided that produce optimal results in conductivity, but cover very little space. It has been found to be a further advantage of the present invention that the width and the length of the connecting lines can optimally adapted to the electrically conductive material used and the purpose of the use of the information carrier to be produced.

Tests have shown that a ratio of 1 : 50 to 1 : 10 between the broad sides and the long sides of the essentially rectangular sub areas of the connecting lines leads to a minimal influence of the connecting lines on the position recognition of the sub areas of the input region of the information carrier according to the present invention.

It has been found that the area available for the sub areas of the input region is determined based on the size of information carrier and the size of the touch screen. It can be preferred that the sub areas of the input region are positioned on this area to be detected by a touch screen. It may be further preferred that the sub areas of the input region and the contact area(s) are connected by the sub areas of the connecting lines.

As an example, preferred sizes and values for certain embodiments are:
- information carrier format ID1 (54 x 85,6 mm)
- screen size of state-of the art smartphones (50 x 85 mm)
- if the information carrier is placed in landscape format on the smartphone, the overlapping area may be 54 x 50 mm
- to include some tolerances, the available area for the sub areas of the input region may be set to 45 x 45 mm
- the sub areas of the input area may be arranged within this area and connected by connecting lines
- in this example, the lines are advantageously not longer than 35 mm
- for 1 mm line width, the ratio is smaller than 1:35

In another preferred embodiment of the invention, the sub areas of the input region are electrically linked to each other by sub areas of the connecting lines and/or the sub areas of the input region are electrically linked by sub areas of the connecting lines to the at least one contact area in a direct and/or an indirect way, wherein the electrical potential of the sub areas of the input region is influenced by a human user touching the at least one contact area, and the electrical potential of the sub areas of the input region causes a local change in capacitance on a touch screen.

In a preferred embodiment of the invention, the sub areas of the input region have essentially elliptical areas. This is particular advantageously because most touch screen technologies are based on the recognition of the shape and the properties of finger tips. By imitating the shape and properties of finger tips, it will come easy for the touch screen to recognize the sub areas of the input region and recognition errors will be reduced to an un-expected extent.

In some embodiments, the sub areas of the input region replicate the arrangement and/ or the properties of finger tips. Replicating the arrangement and the properties of a finger tip means, in the context of the invention, to execute an input to a touch screen just like a finger tip, i.e. causing a local change in capacitance which can be detected by the touch controller of the touch screen. It is a well-known fact for a person skilled in the art that an input can be executed on a touch screen with one or more fingers. In some embodiments, it is preferred that the properties to be replicated are for example the size, specific arrangement and/or the shape of a finger tip. A specific arrangement means in the sense of the present invention the way the sub areas of the input region are arranged on the electrically non-conductive substrate. The term includes the arrangement of the sub areas of the input region to each other, their number, their size(s), the way they are connected, the conductivity with which they are applied on a certain area and the like. Other features that may influence the effect of the information carrier according to the present invention are the pressure applied to the information carrier when brought into contact with a touch screen and/or the distance between the touch structure of the information carrier and the touch screen.

The properties of a fingertip that are supposed to be imitated by the touch points comprise the properties, i.e. their conductivity, shape, and/or size/ dimensions. It was totally surprising that these properties can be used in order to provide an information carrier with enhanced detection precision regarding the position of the sub areas of the input region compared to information carriers known from the prior art. Advantageously, information carriers according to the present invention having touch points with essentially elliptical areas allow for a secure and reliable detection.

The sub areas of the input region have an outline enclosing an area of the input region. By having a defined outline enclosing the sub areas of the input region the detection by a touch screen is improved and enhanced to a surprising extent. This is due to the above mentioned recognition technology used in most touch screen systems which is based on the recognition of essentially elliptical finger tips. A person skilled in the art knows that a circle is a special form of an ellipse.

The reduced area coverage, which is advantageously the essential technical teaching of the present invention, leads to a reduction of production costs for information carriers according to the present invention. This is in particular true if the electrically conductive pattern is formed from electrically conductive materials selected from a group comprising but not limited to electrically conductive ink; metal particles or nanoparticles; electrically conductive particles, in particular carbon black, graphite, graphene, ATO (antimony tin oxide), electrically conductive polymers, in particular Pedot:PSS (poly(3,4-ethylenedioxythiophene), Polystyrene sulfonate), PANI (polyaniline), ITO, EDot, salts, polyacetylene, polypyrrole, polythiophene, conductive threads and other conductive material types or coatings and/or pentacene or any combination of these.

These materials have shown an electric conductivity that allows for being detected by a touch screen when a contact area is touched by a human user and the capacitance of said user is transferred to the electrically conductive elements, such as the sub areas of the input region. Furthermore, elements consisting of these materials enable for galvanically or electrically connecting the electrically conductive areas of the information carrier. The electrically conductive sub areas of one information carrier may consist of combinations of different conductive materials, e.g. a high conductive and low conductive, a high resistive or low resistive or any combinations thereof.

This reduction of production costs occurs for information carriers where the electrically conductive pattern is preferably manufactured by methods but not limited to selected from a group preferably comprising additive printing methods, more preferably comprising screen printing, flexographic printing, gravure printing, intaglio, inkjet printing, pad printing and/or offset lithography, letter press and most preferably comprising flexographic printing, or any combination thereof.

It may be most preferred to manufacture an information carrier according to the present invention by flexographic printing. The layer deposition and therefore the electrical conductivity can be adjusted very precisely using this printing method.

It may also be preferred to use gravure printing, offset lithography, pad printing or inkjet printing. Any additive printing method benefits from reduced coverage as the amount of ink to produce the information carrier can be reduced significantly.

It is also preferred to use other printing methods comprising but not limited to foil transfer methods (hot stamping, cold foil printing) and/ or other coating processes, e.g. physical or chemical vapor deposition, etching or other transfer methods to apply a patterned electrically conductive layer.

Furthermore, it may be preferred that the electrically non-conductive substrate consists of a non-conductive material, in particular paper, cardboard, plastic, wood-based material, composite, glass, ceramic, textile, leather or any combination thereof. These materials have shown to be particularly suitable for the production of information carriers according to the present invention as their being non-conductive generates a large capacitive contrast between the sub areas of the input region and the substrate in that sense that the detection of the position of the sub areas of the input region the touch controller of the touch screen is enhanced.

When using these preferred printing materials or preferred production methods, the production costs for the information carriers mainly depend on the coverage of the functional components of the information carrier. In the context of the present invention, the term "functional components" is used for the components of electrically conductive pattern, i.e. the at least one input region, connecting lines and the at least one contact area. It has been found that a high area coverage of the input region and the contact area can correspond to high material costs, whereas a low area coverage of the functional components of the electrically conductive pattern can correspond to reduced material costs. Tests have shown that a low area coverage does not only lead to a proportional reduction of production costs, but to an even larger reduction as would have been expected as a consequence of a proportional correlation. Thus, it came as a surprise that there is not only a proportional correlation between the area coverage of the functional components of the information carrier and the production cost, but also a stronger correlation.

It came as a surprise that the advantages according to the present invention can be achieved by using such a large number of different materials and manufacture methods. This gives a way to a great flexibility regarding the production process of the conductive elements of the information carrier according to the present invention. Furthermore, it is easy to adapt an information carrier according to the present invention to certain applications where pre-defined features have to be met.

It may be preferred that the information carrier according to the present invention is connected to an object or that the object itself serves as a substrate. An object in the sense of the present invention is in particular a thing, an article or an entity. In a preferred embodiment of the present invention, the information carrier is connected to or serves as a part of a package. The attachment or application can be effected, for example, self-adhesively, or by means of other known joining technologies or auxiliaries. It is also preferred that the electrically conductive areas and patterns are printed directly onto the object.

For some applications, it may be advantageous to overprint the information carrier according to the present invention with additional layers. These layers may serve decorative purposes, hide the functional parts of the touch structure and/or improve the protection of the information carrier against for example water and/or contaminations. It is known that the number of overprinting layers contributes to the production costs of information carriers. It is therefore a general object in the technical filed of printed electronics to reduce the numbers of overprinting layers in order to reduce production costs. It has surprisingly been found that the numbers of additional layers can be reduced to an unexpected extent when silver-based ink is used to produce the electrically conductive layer comprising the touch structure.

### Brief description of the drawings:

These and other objects, features and advantages of the present invention will be best appreciated when considered in view of the following detailed description of the accompanying drawings:
- Fig. 1: shows a preferred embodiment of an information carrier according to the present invention with a contact area comprising two collector areas, an outline and a ray pattern.
- Fig. 2: shows a preferred embodiment of an information carrier according to the present invention with a contact area comprising an alternatively designed ray pattern.
- Fig. 3: shows a preferred embodiment of an information carrier according to the present invention with sub areas of the input region comprising an outline and a grid pattern.
- Fig. 4: shows a preferred embodiment of an information carrier according to the present invention with a contact area comprising an outline and a grid pattern.
- Fig. 5: shows a preferred embodiment of an information carrier according to the present invention with two contact areas comprising negatively and positively filled patterns wherein the information carrier is part of a packaging showing an exemplary mode of application.
- Fig. 6: shows a preferred embodiment of an information carrier according to the present invention with sub areas of the input region comprising an outline and ray patterns and a contact area comprising an outline and an irregular grid pattern.
- Fig. 7: shows a preferred embodiment of an information carrier according to the present invention with sub areas of the input region comprising an outline and a grid pattern (hexagonal unit cell) and a contact area comprising an outline and a grid pattern (rhomb unit cell).

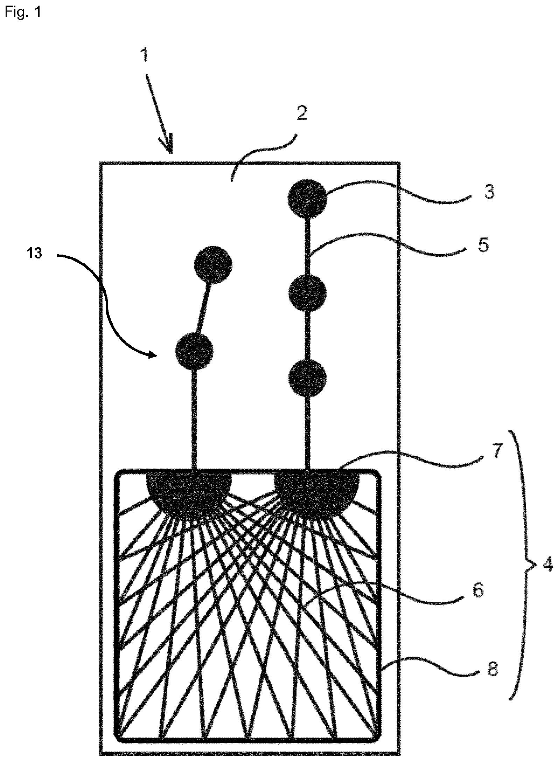

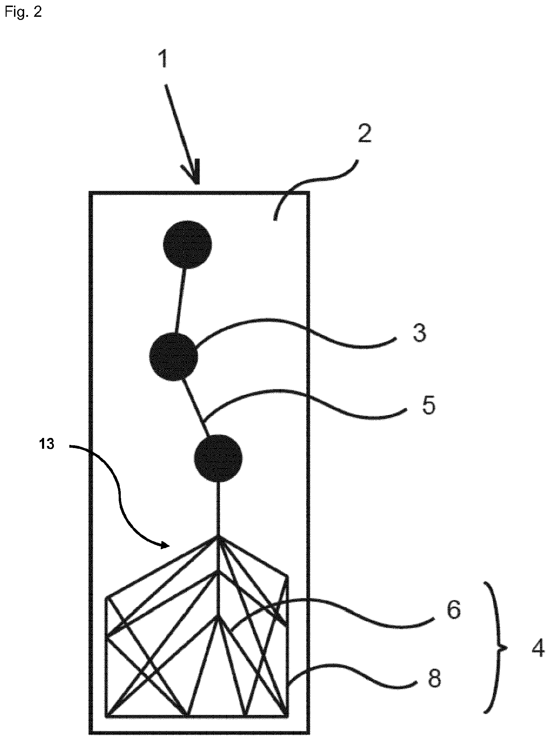

Figure 1 shows a preferred embodiment of an information carrier (1) according to the present invention with a contact area (4) comprising two collector areas (7), an outline (8) and a ray pattern (6). The information carrier (1) consists of an electrically non-conductive substrate (2) on which an electrically conductive pattern (13) is applied. The electrically conductive pattern (13) consists of an input region (3), at least one contact area (4) and connecting lines (5). The input region (3) is formed from single sub areas which have essentially elliptical areas and are connected to each other by single sub areas of the connecting lines (5). In figure 1, the sub areas of the input region (3) are completely filled. In the context of this application, this complete filling of the sub areas of the input region (3) is also referred to an area coverage of 100 %. As can be seen from figure 1, the sub areas of the input region (3) can be arranged in a straight line as the three sub areas of the input region represented by the right string of sub areas. The sub areas of the input-area (3) may also be arranged in any other spatial relation as can be seen from the left string of sub areas of the input region (3) in figure 1 or from figures 2 to 5 of the present application. Two of the five sub areas of the input region (3) in figure 1 are directly connected to the contact area (4) of the information carrier. In the context of this application, the term "direct connection" refers to two areas that are linked by a connecting line without a further sub area in between. The other three sub areas of the input region (3) are indirectly connected to the contact area (4) meaning that a further sub area is part of the connection.

The sub areas of the connecting lines (5) connect either two sub areas of the input region (3) to each other or one sub area of the input region (3) to the contact area (4). The connecting lines comprise a long side and a broad side wherein the contact to the areas to be connected by the connecting line is realized by the shorter broad side of the connecting line. Essentially, the sub areas of the connecting line (5) have a rectangular shape. The lengths of the long sight of the connecting line (5) correspond to the distance between the two areas which are connected by the corresponding connecting line (5).

In figure 1, a contact area (4) is shown comprising an outline (8), a ray pattern (6) and two collector areas (7). The two collector areas (7) are arranged at the interface between the contact area (4) and the connecting line (5). The collector areas (7) in figure 1 have the shape of part circles and represent a preferred embodiment of the collector areas (7) according to the present invention. The contact area (4) of the present invention has an outline (8) which encloses and defines the area of the contact area (4). In the exemplary contact area (4) of figure 1 the outline (8) and the collector areas (7) are connected by rays (6) which are sent out by the collector areas (7). As an example, the density of the rays (6) is not constant over the area of the contact area (4). In the central region of the contact area (4) between the collector areas (7), the density of rays (6) is maximal whereas the density of rays (6) is smaller in the vicinity of the outline (8) of the contact area (4).

Up to now, persons skilled in the art thought that a complete filling of the sub areas of the input region (3) and/or the contact area (4) was necessary the enable reliable detection of the touch points (4) by a touch screen (14) and provide good transfer properties of the contact area (4). This idea was due to the operation mode of capacitive touch screens (14).

A human user who touches the contact area (4) of the information carrier (1) according to the present invention transmits his electrical potential to the components of the electrically conductive pattern (13) of the information carrier (1). As the components of the electrically conductive pattern (13), i.e. the sub areas of the input region (3), the contact area (4) and the connecting lines (5), are made from a conductive material, the electrical potential of the human user is transferred to all components of the electrically conductive pattern (13) as a change in capacitance. When the information carrier (1) is brought into contact with a touchscreen (14) or a touchscreen (14) bearing device, the touch controller of the touchscreen (14) will detect the sub areas of the input region (3) of the information carrier (1) due to the change in capacitance which is caused upon the electrodes of the touch controller by the sub areas of the input region (3).

The sub areas of the connecting lines (5) influence the electrodes of the touch controller of the touchscreen (14). This influence of the sub areas of the connecting lines (5) is not desired in the context of the present invention and this influence is advantageously reduced by the preferred design of the electrically conductive pattern (13) of the information carrier (1) according to the present invention.

Figure 2 shows a preferred embodiment of an information carrier according to the present invention with a contact area (4) comprising an alternatively designed ray pattern (6). As can be seen from figure 2, the sub areas of the input region (3) only form one string of three single sub areas of the input region (3) wherein the sub areas of the input region (3) are connected by sub areas of the connecting lines (5). One of the sub areas of the input region (3) is directly connected to the contact area (4) of the information carrier (1). The other two sub areas of the input region (3) are indirectly connected to the contact area (4).

In figure 2, the contact area (4) of the information carrier (1) is formed by rays (6) and an outline (8). In this example of a preferred design of the contact area (4) the shape of the contact area (4) is five-edged, and the contact area (4) does not comprise any collector areas (7). The rays (6) forming the contact area (4) comprise main lines and side lines which run from contact area (4) to the opposite edges of the contact area (4) or end in other main or side rays (6). Input region (3), connecting lines (5) and the contact area (4) form an entity of electrically conductive components which is in the context of the present invention referred to as electrically conductive pattern (13). This electrically conductive pattern (13) is applied on an electrically non-conductive substrate (2).

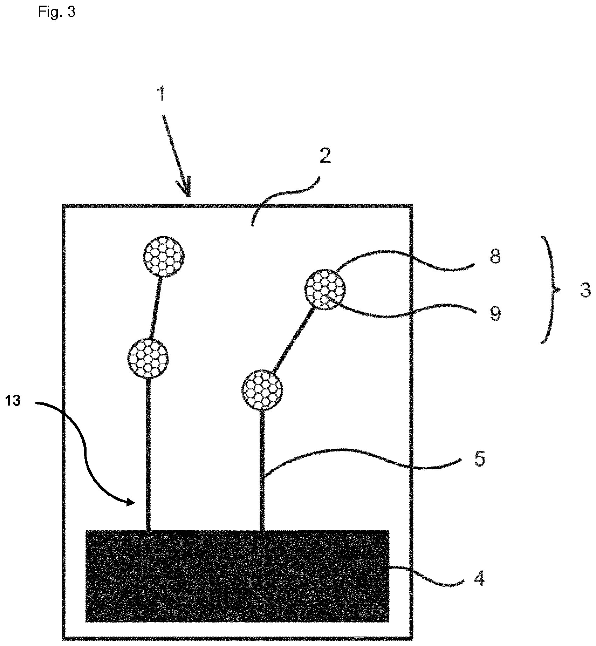

Figure 3 shows a preferred embodiment of an information carrier (1) according to the present invention with sub areas of the input region (3) comprising an outline (8) and a grid pattern (9). Figure 3 shows an electrically conductive pattern (13), which is exemplary, formed by a completely filled contact area (4), sub areas of connecting lines (5) and sub areas of an input region (3). In figure 3, the sub areas of the input region (3) are formed by an outline (8) and a grid pattern (9), which fills the single sub areas of the input region (3). In the context of the present invention, the term "grid" refers to a two-dimensional structure formed from a serious of intersecting straight, vertical, horizontal and/ or angular or curved lines. Figure 3 shows a grid pattern (9) consisting of six-edge shaped honeycomb structures that are arranged next to each other so that every edge of one honeycomb structure equally represents an edge of an adjacent honeycomb structure. In the context of the present invention, a grid pattern (9) as shown in figure 3 of the present invention will be referred to as a symmetric grid pattern (9). The term "symmetric" refers to an object that appears the same along an axis or when rotated around a point of symmetry. The symmetry axis has to cross the shape through the middle.

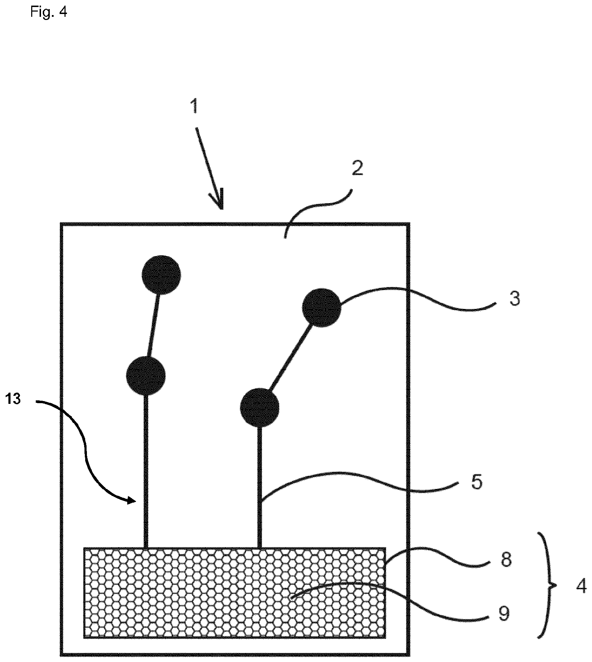

Figure 4 shows a preferred embodiment of an information carrier (1) according to the present invention with a contact area (4) comprising an outline (8) and a grid pattern (9). The electrically conductive pattern (13) is in figure 4 exemplarily formed by completely filled sub areas of the input region (3), connecting lines (5) and a contact area (4), which is formed by an outline (8) and the grid pattern (9). Again, this grid pattern (9) is formed from honeycomb structures having six edges.

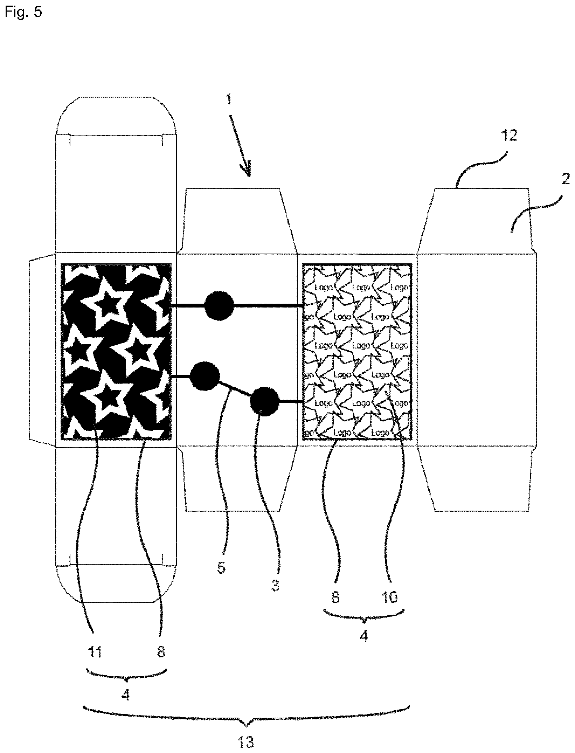

Figure 5 shows a preferred embodiment of an information carrier (1) according to the present invention with two contact areas (4) comprising negatively (11) and positively (10) filled patterns wherein the information carrier (1) is part of a packaging showing an exemplary mode of application. The electrically conductive pattern (13) in figure 5 consists of completely filled sub areas of the input region (3), connecting lines (5) and two contact areas (4). The left contact area (4) is formed from an outline (8) and an individual filled pattern, which is in the context of the present invention referred to as a "negative filled pattern". A negative filled pattern stands for a contact area (4) or a sub area of an input region (3) which is completely filled except of the essential graphic parts of a graphic design or a logo. Thus, neither the logo nor the graphic design is printed onto the substrate (2) of the information carrier (1) but the optical effect of the graphic design of a logo is achieved by omitting a graphic design or the logo within an area with solid filing. The optical effect of this negative filled pattern can be compared to a negative when developing a photograph.

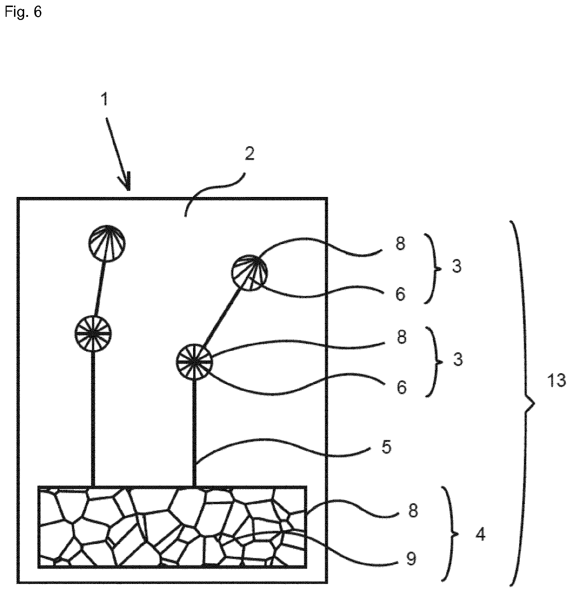

The second contact area shown on the right side of figure 5 consists of an outline (8) and a "positive filled pattern". This means in the context of the present invention, that the essential parts of the pattern are printed with the electrically conductive material onto the electrically non-conductive substrate (2). In figure 5, the information carrier (1) according to the present invention is attached to an object, in this case a packaging. The outlines and the borderlines between the different parts of the packaging are marked by die lines (12).Figure 6 shows a preferred embodiment of an information carrier (1) according to the present invention with electrically conductive sub areas of the input region (3) formed by an outline (8) and ray patterns (6) and an contact area (4) formed by an outline (8) and an irregular grid pattern (9).

In particular, figure 6 shows an information carrier (1) where the electrically conductive sub areas of the input region (3) as well as the contact area (4) are designed using either a grid (9) and/or a ray pattern (6). Furthermore, the sub areas of the input region (3) show two preferred arrangements according to the present invention. The sub areas of the input region (3) in the upper half of the information carrier shown in figure 6 show how a ray pattern can be designed to point to a spot being different to the center of the touch point (3). The touch points (3) in the lower half of the information carrier shown in figure 6 show how the lines points exactly to the center of a touch point (3). For some applications, ray and grid patterns can be combined and arranged together on an information carrier (1) according to a preferred embodiment of the invention.

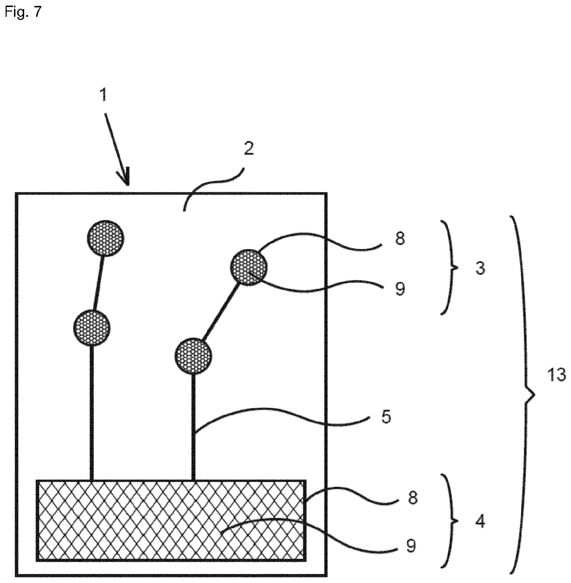

Figure 7 shows another preferred embodiment of an information carrier (1) according to the present invention with sub areas of the input region (3) comprising an outline (8) and a grid pattern (9) and a contact area (4) comprising an outline (8) and a grid pattern (9). Figure 7 illustrates that an information carrier (1) according to the present invention may comprise differently designed grid patterns. The grid pattern of the input region (3) is designed as hexagonal unit cell, whereas the grid pattern of the contact area (4) is designed as rhomb unit cell. Furthermore, Figure 7 presents that the sub areas of the input region (3) has an area coverage different to that one for the contact area (4).

### List of reference signs

- 1: capacitive information carrier
- 2: electrically non-conductive substrate
- 3: electrically conductive area (sub area of input region)
- 4: electrically conductive area (contact area)
- 5: electrically conductive area (connecting line)
- 6: ray pattern
- 7: collector area
- 8: outline
- 9: grid pattern
- 10: individual filled pattern: positive
- 11: individual filled pattern: negative
- 12: die line
- 13: electrically conductive pattern

## Claims

1. An information carrier (1) comprising an electrically non-conductive substrate (2) with an electrically conductive layer arranged as a pattern (13) which encodes information wherein said electrically conductive pattern (13) is formed from at least one connecting line (5), at least one contact area (4) and one input region comprising at least two sub areas (3),
**characterized in that**
at least one sub area of the input region (3) is electrically connected to the contact area (4) via the connecting line (5), the sub areas of the input region (3) and the contact area have an outline (8) enclosing a defined area, wherein the sub areas of the input region (3) have an area coverage in a range of 20 to 80 % and/or the contact area (4) has an area coverage in a range of 5 to 80 %.

2. An information carrier (1) according to one or more of the preceding claims
**characterized in that**
the sub areas of the input region (3) comprise a grid pattern which is selected from a group comprising a honeycomb pattern, Voronoi pattern, half tone patterns with the single dots being connected either intended or by dot gain, regular square shapes, irregular square shapes, sub areas having an area coverage of less than 80 %, description fields and/or any combination thereof.

3. An information carrier (1) according to one or more of the preceding claims
**characterized in that**
the sub areas of the input region (3) comprise rays, lines and/or curves or any combination thereof.

4. An information carrier (1) according to one or more of the preceding claims
**characterized in that**
the sub areas of the input region (3) has an area coverage in a range of preferably 20 to 80 %, more preferably 40 to 80 % and most preferably 60 to 80 %.

5. An information carrier (1) according to one or more of the preceding claims
**characterized in that**
the at least one contact area (4) has a minimal area of preferably 0.2 cm², more preferably 0.5 cm², most preferably 1 cm².

6. An information carrier (1) according to one or more of the preceding claims
**characterized in that**
the at least one contact area (4) enclosed by the outline (8) has a minimal area of preferably 0.2 cm², more preferably 0.5 cm², most preferably 1 cm².

7. An information carrier (1) according to one or more of the preceding claims
**characterized in that**
the at least one contact area (4) comprises a grid pattern which is selected from a group comprising a honeycomb pattern, Voronoi pattern, regular square shapes, irregular square shapes, sub areas having an area coverage of less than 80 %, description fields and/or any combination thereof.

8. An information carrier (1) according to one or more of the preceding claims
**characterized in that**
the at least one contact area (4) comprises rays, lines and/or curves or any combination thereof.

9. An information carrier (1) according to one or more of the preceding claims
**characterized in that**
the at least one contact area (4) has an area coverage in a range of preferably 5 to 80 %, more preferably 10 to 80 % and most preferably 20 to 80 %.

10. An information carrier (1) according to one or more of the preceding claims
**characterized in that**
the at least one contact area (4) comprises a collector area (7) for joining a grid pattern which is selected from a group comprising a honeycomb pattern, Voronoi pattern, regular square shapes, irregular square shapes, sub areas having an area coverage of less than 80 %, description fields and/or any combination thereof.

11. An information carrier (1) according to one or more of the preceding claims
**characterized in that**
the connecting lines (5) have an essentially rectangular area with broad sides and the long sides, the ratio of said broad sides and the long sides lying in a range of preferably 1 : 500 to 1 : 5, more preferably 1 : 100 to 1 : 10, most preferably 1 : 50 to 1 : 10.

12. An information carrier (1) according to one or more of the preceding claims
**characterized in that**
the electrically conductive pattern (13) is formed from electrically conductive materials selected from a group comprising electrically conductive ink; metal particles or nanoparticles; electrically conductive particles, in particular carbon black, graphite, graphene, ATO (antimony tin oxide), electrically conductive polymers, in particular Pedot:PSS (poly(3,4-ethylenedioxythiophene), Polystyrene sulfonate), PANI (polyaniline), ITO, EDot, salts, polyacetylene, polypyrrole, polythiophene, conductive threads and other conductive material types or coatings and/or pentacene or any combination thereof.

13. An information carrier (1) according to one or more of the preceding claims
**characterized in that**
the sub areas of the input region (3) are essentially elliptical.

14. Use of an information carrier (1) according to one or more of the preceding claims
**characterized in that**
the electrical potential of the sub areas of the input region (3) is influenced by a human user touching the at least one contact area (4) and the electrical potential of the sub areas of the input region (3) cause a local change in capacitance on a touch screen (14).

15. Method of manufacture an information carrier (1) according to one or more of the preceding claims
**characterized in that**
the information carrier (1) is manufactured by methods selected from a group preferably comprising additive printing methods, more preferably comprising screen printing, gravure printing, intaglio, inkjet printing, pad printing, offset lithography, letter press and most preferably comprising flexographic printing, or any combination thereof.

## Patentansprüche

1. Informationsträger (1), der ein elektrisch nicht leitfähiges Substrat (2) mit einer elektrisch leitfähigen Schicht umfasst, die als ein Muster (13) angeordnet ist, das Informationen kodiert, wobei das elektrisch leitfähige Muster (13) aus mindestens einer Verbindungsleitung (5), mindestens einer Kontaktfläche (4) und einem Eingabebereich, der mindestens zwei Teilflächen (3) umfasst, gebildet ist,
**dadurch gekennzeichnet, dass**
mindestens eine Teilfläche des Eingabebereichs (3) über die Verbindungsleitung (5) mit der Kontaktfläche (4) elektrisch verbunden ist, die Teilflächen des Eingabebereichs (3) und der Kontaktfläche eine einen definierten Bereich umschließende Kontur (8) aufweisen, wobei die Teilflächen des Eingabebereichs (3) eine Flächendeckung in einem Bereich von 20 bis 80 % und/oder die Kontaktfläche (4) eine Flächendeckung in einem Bereich von 5 bis 80 % aufweisen.

2. Informationsträger (1) nach einem oder mehreren der vorstehenden Ansprüche
**dadurch gekennzeichnet, dass**
die Teilflächen des Eingabebereichs (3) ein Gittermuster umfassen, das aus einer Gruppe ausgewählt ist, die ein Wabenmuster, Voronoi-Muster, Halbtonmuster mit Verbindung der einzelnen Punkte entweder beabsichtigt oder durch Tonwertzunahme, regelmäßige quadratische Formen, unregelmäßige quadratische Formen, Teilflächen eine Flächendeckung von weniger als 80 % aufweisend, Beschreibungsfelder und/oder eine beliebige Kombination davon umfasst.

3. Informationsträger (1) nach einem oder mehreren der vorstehenden Ansprüche
**dadurch gekennzeichnet, dass**
die Teilflächen des Eingabebereichs (3) Strahlen, Linien und/oder Kurven oder eine beliebigen Kombination davon umfassen.

4. Informationsträger (1) nach einem oder mehreren der vorstehenden Ansprüche
**dadurch gekennzeichnet, dass**
die Teilflächen des Eingabebereichs (3) eine Flächendeckung in einem Bereich von vorzugsweise 20 bis 80 %, bevorzugter 40 bis 80 % und besonders bevorzugt 60 bis 80 % aufweist.

5. Informationsträger (1) nach einem oder mehreren der vorstehenden Ansprüche
**dadurch gekennzeichnet, dass**
die mindestens eine Kontaktfläche (4) eine minimale Fläche von vorzugsweise 0,2 cm², bevorzugter 0,5 cm², besonders bevorzugt 1 cm² aufweist.

6. Informationsträger (1) nach einem oder mehreren der vorstehenden Ansprüche
**dadurch gekennzeichnet, dass**
die mindestens eine von der Kontur (8) umschlossene Kontaktfläche (4) eine minimale Fläche von vorzugsweise 0,2 cm², bevorzugter 0,5 cm², besonders bevorzugt 1 cm² aufweist.

7. Informationsträger (1) nach einem oder mehreren der vorstehenden Ansprüche
**dadurch gekennzeichnet, dass**
die mindestens eine Kontaktfläche (4) ein Gittermuster umfasst, das aus einer Gruppe ausgewählt ist, die ein Wabenmuster, Voronoi-Muster, regelmäßige quadratische Formen, unregelmäßige quadratische Formen, Teilflächen eine Flächendeckung von weniger als 80 % aufweisend, Beschreibungsfelder und/oder eine beliebige Kombination davon umfasst.

8. Informationsträger (1) nach einem oder mehreren der vorstehenden Ansprüche
**dadurch gekennzeichnet, dass**
die mindestens eine Kontaktfläche (4) Strahlen, Linien und/oder Kurven oder eine beliebige Kombination davon umfasst.

9. Informationsträger (1) nach einem oder mehreren der vorstehenden Ansprüche
**dadurch gekennzeichnet, dass**
die mindestens eine Kontaktfläche (4) eine Flächendeckung in einem Bereich von vorzugsweise 5 bis 80 %, bevorzugter 10 bis 80 % und besonders bevorzugt 20 bis 80 % aufweist.

10. Informationsträger (1) nach einem oder mehreren der vorstehenden Ansprüche
**dadurch gekennzeichnet, dass**
die mindestens eine Kontaktfläche (4) eine Kollektorfläche (7) zum Zusammenfügen eines Gittermusters umfasst, das aus einer Gruppe ausgewählt ist, die ein Wabenmuster, Voronoi-Muster, regelmäßige quadratische Formen, unregelmäßige quadratische Formen, Teilflächen eine Flächendeckung von weniger als 80 % aufweisend, Beschreibungsfelder und/oder eine beliebige Kombination davon umfasst.

11. Informationsträger (1) nach einem oder mehreren der vorstehenden Ansprüche
**dadurch gekennzeichnet, dass**
die Verbindungsleitungen (5) eine im Wesentlichen rechteckige Fläche mit Breitseiten und den Längsseiten aufweisen, wobei das Verhältnis der Breitseiten und der Längsseiten in einem Bereich von vorzugsweise 1 : 500 bis 1 : 5, bevorzugter 1 : 100 bis 1 : 10, besonders bevorzugt 1 : 50 bis 1 : 10 liegt.

12. Informationsträger (1) nach einem oder mehreren der vorstehenden Ansprüche
**dadurch gekennzeichnet, dass**
das elektrisch leitfähige Muster (13) aus elektrisch leitfähigen Materialien gebildet ist, die aus einer Gruppe ausgewählt sind, die elektrisch leitfähige Tinte; Metallpartikel oder Nanopartikel; elektrisch leitfähige Partikel, insbesondere Ruß, Graphit, Graphen, ATO (Antimon-Zinn-Oxid), elektrisch leitfähige Polymere, insbesondere Pedot:PSS (Poly(3,4-ethylendioxythiophen), Polystyrolsulfonat), PANI (Polyanilin), ITO, EDot, Salze, Polyacetylen, Polypyrrol, Polythiophen, leitfähige Fäden und andere leitfähige Materialtypen oder Beschichtungen und/oder Pentacen oder eine beliebige Kombination davon umfassen.

13. Informationsträger (1) nach einem oder mehreren der vorstehenden Ansprüche
**dadurch gekennzeichnet, dass**
die Teilflächen des Eingabebereichs (3) im Wesentlichen elliptisch sind.

14. Verwendung eines Informationsträgers (1) nach einem oder mehreren der vorstehenden Ansprüche
**dadurch gekennzeichnet, dass**
das elektrische Potential der Teilflächen des Eingabebereichs (3) durch eine Berührung der mindestens einen Kontaktfläche (4) durch einen menschlichen Benutzer beeinflusst wird und das elektrische Potential der Teilflächen des Eingabebereichs (3) eine lokale Kapazitätsänderung auf einem Touchscreen (14) bewirkt.

15. Verfahren zur Herstellung eines Informationsträgers (1) nach einem oder mehreren der vorstehenden Ansprüche
**dadurch gekennzeichnet, dass**
der Informationsträger (1) durch Verfahren hergestellt wird, die aus einer Gruppe ausgewählt sind, die vorzugsweise additive Druckverfahren, bevorzugter umfassend Siebdruck, Tiefdruck, Stichtiefdruck, Tintenstrahldruck, Tampondruck, Offsetlithographie, Buchdruck und besonders bevorzugt Flexodruck oder eine beliebige Kombination davon.

## Revendications

1. Support d'informations (1) comprenant un substrat électriquement non conducteur (2) avec une couche électriquement conductrice agencée en tant que modèle (13) qui code des informations
dans lequel ledit modèle électriquement conducteur (13) est formé à partir d'au moins une ligne de raccordement (5), au moins une zone de contact (4) et une zone d'entrée comprenant au moins deux sous-zones (3),
**caractérisé en ce que**
au moins une sous-zone de la région d'entrée (3) est connectée électriquement à la zone de contact (4) via la ligne de raccordement (5), les sous-zones de la région d'entrée (3) et de la zone de contact présentent un contour (8) encerclant une zone définie, dans lequel les sous-zones de la région d'entrée (3) présentent une couverture de zone dans une plage de 20 à 80 % et/ou la zone de contact (4) présente une couverture de zone dans une plage de 5 à 80 %.

2. Support d'informations (1) selon une ou plusieurs des revendications précédentes
**caractérisé en ce que**
les sous-zones de la région d'entrée (3) comprennent un modèle de grille qui est sélectionné à partir d'un groupe comprenant un modèle alvéolaire, un modèle de Voronoï, des modèles en demi-teinte avec les points uniques qui sont connectés soit à dessein soit par gain de points, des formes carrées régulières, des formes carrées irrégulières, des sous-zones présentant une couverture de zone inférieure à 80 %, des champs de description et/ou toute combinaison de ceux-ci.

3. Support d'informations (1) selon une ou plusieurs des revendications précédentes
**caractérisé en ce que**
les sous-zones de la région d'entrée (3) comprennent des rayons, des lignes et/ou des courbes ou toute combinaison de ceux-ci.

4. Support d'informations (1) selon une ou plusieurs des revendications précédentes
**caractérisé en ce que**
les sous-zones de la région d'entrée (3) présente une couverture de zone dans une plage de préférence de 20 à 80 %, plus préférentiellement de 40 à 80 % et le plus préférentiellement de 60 à 80 %.

5. Support d'informations (1) selon une ou plusieurs des revendications précédentes
**caractérisé en ce que**
l'au moins une zone de contact (4) présente une zone minimale de préférence de 0,2 cm², plus préférentiellement de 0,5 cm², le plus préférentiellement de 1 cm².

6. Support d'informations (1) selon une ou plusieurs des revendications précédentes
**caractérisé en ce que**
l'au moins une zone de contact (4) encerclée par le contour (8) présente une zone minimale de préférence de 0,2 cm², plus préférentiellement de 0,5 cm², le plus préférentiellement de 1 cm².

7. Support d'informations (1) selon une ou plusieurs des revendications précédentes
**caractérisé en ce que**
l'au moins une zone de contact (4) comprend un modèle de grille qui est sélectionné à partir d'un groupe comprenant un modèle alvéolaire, un modèle de Voronoï, des formes carrées régulières, des formes carrées irrégulières, des sous-zones présentant une couverture de zone inférieure à 80 %, des champs de description et/ou toute combinaison de ceux-ci.

8. Support d'informations (1) selon une ou plusieurs des revendications précédentes
**caractérisé en ce que**
l'au moins une zone de contact (4) comprend des rayons, des lignes et/ou des courbes ou toute combinaison de ceux-ci.

9. Support d'informations (1) selon une ou plusieurs des revendications précédentes
**caractérisé en ce que**
l'au moins une zone de contact (4) présente une couverture de zone dans une plage de préférence de 5 à 80 %, plus préférentiellement de 10 à 80% et le plus préférentiellement de 20 à 80 %.

10. Support d'informations (1) selon une ou plusieurs des revendications précédentes
**caractérisé en ce que**
l'au moins une zone de contact (4) comprend une zone de collecteur (7) pour assembler un modèle de grille qui est sélectionné à partir d'un groupe comprenant un modèle alvéolaire, un modèle de Voronoï, des formes carrées régulières, des formes carrées irrégulières, des sous-zones présentant une couverture de zone inférieure à 80 %, des champs de description et/ou toute combinaison de ceux-ci.

11. Support d'informations (1) selon une ou plusieurs des revendications précédentes
**caractérisé en ce que**
les lignes de raccordement (5) présentent une zone essentiellement rectangulaire avec des côtés larges et les côtés longs, le rapport desdits côtés larges et des côtés longs se trouvant dans une plage de préférence de 1 : 500 à 1 : 5, plus préférentiellement de 1 : 100 à 1 : 10, le plus préférentiellement de 1 : 50 à 1 : 10.

12. Support d'informations (1) selon une ou plusieurs des revendications précédentes
**caractérisé en ce que**
le modèle électriquement conducteur (13) est formé à partir de matériaux électriquement conducteurs sélectionnés à partir d'un groupe comprenant une encre électriquement conductrice ; des particules ou nanoparticules métalliques ; des particules électriquement conductrices, en particulier du noir de carbone, du graphite, du graphène, de l'ATO (oxyde d'antimoine-étain), des polymères électriquement conducteurs, en particulier du Pedot:PSS (poly(3,4-éthylènedioxythiophène), sulfonate de polystyrène), de la PANI (polyaniline), de l'ITO, de l'EDot, des sels, du polyacétylène, du polypyrrole, du polythiophène, des fils conducteurs et d'autres types ou revêtements de matériau conducteur et/ou du pentacène ou toute combinaison de ceux-ci.

13. Support d'informations (1) selon une ou plusieurs des revendications précédentes
**caractérisé en ce que**
les sous-zones de la région d'entrée (3) sont essentiellement elliptiques.

14. Utilisation d'un support d'informations (1) selon une ou plusieurs des revendications précédentes
**caractérisée en ce que**
le potentiel électrique des sous-zones de la région d'entrée (3) est influencé par un utilisateur humain touchant l'au moins une zone de contact (4) et le potentiel électrique des sous-zones de la région d'entrée (3) amènent un changement local de capacité sur un écran tactile (14).

15. Procédé de fabrication d'un support d'informations (1) selon une ou plusieurs des revendications précédentes
**caractérisé en ce que**
le support d'informations (1) est fabriqué par des procédés sélectionnés à partir d'un groupe comprenant de préférence des procédés d'impression additive, plus préférentiellement comprenant la sérigraphie, l'héliogravure, la gravure en creux, l'impression à jet d'encre, l'impression au tampon, la lithographie offset, l'impression en relief et le plus préférentiellement comprenant l'impression en flexographie ou toute combinaison de celles-ci.
